# EUROPEAN PATENT SPECIFICATION

(11) **EP 3 845 610 B1**
(45) Date of publication and mention of the grant of the patent: **11.10.2023**
(21) Application number: 20216973.6
(22) Date of filing: 23.12.2020
(51) Int. Cl.: C09D 5/08, C09D 4/00, C09D 183/06

(54) **WATER-BASED COATING MATERIAL AND METHOD FOR MANUFACTURING THE SAME**
WASSERBASIERTES BESCHICHTUNGSMATERIAL UND VERFAHREN ZUR HERSTELLUNG DIESES MATERIAL
MATÉRIEL DE REVÊTEMENT À BASE D'EAU ET PROCÉDÉ DE FABRICATION DE CE MATERIEL

(30) Priority: 31.12.2019 US 201916731596; 31.12.2019 TW 108148532
(43) Date of publication of application: 07.07.2021
(73) Proprietor: Industrial Technology Research Institute, Hsinchu (TW)
(72) Inventor: Liao, Kai-Wei, 330 Taoyuan City (TW); Tang, Wei-Cheng, 300 Hsinchu City (TW); Yu, Ya-Tin, 220 New Taipei City (TW); Huang, Yun-Shan, 350 Miaoli County (TW); Wei, Yeu-Kuen, 300 Hsinchu City (TW); Tsai, Cheng-Yang, 106 Taipei City (TW); Su, Yi-Che, 302 Zhubei City, Hsinchu County (TW)
(74) Representative: Michalski Hüttermann & Partner Patentanwälte mbB

(56) References cited:
- WO-A1-2012/165084
- WO-A1-2014/073312
- JP-A- 2014 237 880
- US-A1- 2011 091 654
- US-A1- 2015 183 936

## Description

### TECHNICAL FIELD

The technical field relates to a water-based coating material, and in particular it relates to a method for manufacturing the same.

### BACKGROUND

The global market for metal pretreatment and anti-corrosion coatings is about 17 million tons (4 billion US dollars), of which the Asian market accounts for about 37%. The most widely used materials include phosphate and chromate (86%), chromium-free coatings (1 %), and others (13%). Currently, the best anti-corrosion metal film treatment uses hexavalent chromium, but the chromium-free coating has become a mainstay of new environmental protection technological development in an era of rising environmental awareness and stricter international regulations. In addition, a large amount of surfactant is being added to traditional water-based coating material to improve the dispersion stability of the particles. However, the hydrophilic groups of the surfactant will absorb water to reduce the anti-corrosion ability of the coated film after the coating material is dried to form the coated film.

Accordingly, a novel chromium-less, water-based, and anti-corrosion coating material is called for.

US 2011/091654 A1 describes a method of preparing anti-corrosive hybrid sol-gel film coating on zinc or zinc alloy coated metallic substrates comprising the steps of preparing a mixture of sol-gel from hydrolysable silicon alkoxides, sodium vanadate solution combined with colloidal silica in a beaker and vigorously stirred; adding within 20 seconds of two separated phase formation between silica precursors and colloidal silica acetic acid or dilute nitric acid as a catalyst to initiate hydrolysis reaction of silicon alkoxides and condensation reaction in the sol gel composition, continuously stirring the mixture for about 24 hours to form a single phase solution, applying the solution on cleaned zinc or zinc alloy coated metal substrates to form a transparent sol-gel coating film and drying the coated substrates at 50° to 200° C. for 10 to 60 minutes.

### SUMMARY

The invention is defined by the features of the independent claims.

One embodiment of the disclosure provides a method for manufacturing a water-based coating material, including: (a) reacting tetraalkoxysilane, acidic aqueous solution of metal salt, and alkyl-trialkoxysilane to form an oligomer, wherein the metal salt includes vanadium salt, titanium salt, or zirconium salt; (b) reacting the oligomer with colloidal silica particles to form a modified oligomer; and (c) reacting the modified oligomer with trialkoxyepoxysilane to obtain a water-based coating material, wherein the colloidal silica particles have a diameter of 15 nm to 30 nm.

One embodiment of the disclosure provides a water-based coating material that includes a product formed by reacting a modified oligomer with trialkoxyepoxysilane, wherein the modified oligomer is formed by reacting an oligomer with colloidal silica particles, and wherein the oligomer is formed by reacting tetraalkoxysilane, acidic aqueous solution of metal salt, and alkyl-trialkoxysilane, wherein the metal salt includes vanadium salt, titanium salt, or zirconium salt, wherein the colloidal silica particles have a diameter of 15 nm to 30 nm.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details.

One embodiment of the disclosure provides a method for manufacturing a water-based coating material, including: (a) reacting tetraalkoxysilane, acidic aqueous solution of metal salt, and alkyl-trialkoxysilane to form an oligomer, wherein the metal salt includes vanadium salt, titanium salt, or zirconium salt; (b) reacting the oligomer with colloidal silica particles to form a modified oligomer; and (c) reacting the modified oligomer with trialkoxyepoxysilane to obtain a water-based coating material. In some embodiments, the weight ratio of the tetraalkoxysilane to the metal salt is from 1:0.01 to 1:0.3, such as about 1:0.01 to 1:0.05, about 1:0.05 to 1:0.10, about 1:0.10 to 1:0.15, about 1:0.15 to 1:0.20, about 1:0.20 to 1:0.25, about 1:0.25 to 1:0.3, or the like, but it is not limited thereto. If the metal salt content is too low, the electrochemical AC impedance value of the film will be lower, which means that the corrosion inhibition of the film is insufficient. If the metal salt content is too high, the pH value of the coating material will be too low to negatively influence the compactness of the film. The weight ratio of the tetraalkoxysilane to the alkyl-trialkoxysilane may be from 1:0.1 to 1:3.0, such as 1:0.1 to 1:0.5, 1:0.5 to 1:1.0, 1:1.0 to 1:1.5, 1:1.5 to 1:2.0, 1:2.0 to 1:2.5, 1:2.5 to 1:3.0, or the like, but it is not limited thereto. If the alkyl-trialkoxysilane content is too low, the oligomer will be easily gelled due to insufficient stability, and the hydrophilic corrosion elements will easily permeate into the substrate due to the film being insufficiently hydrophobic. If the alkyl-trialkoxysilane content is too high, the oligomer will be more hydrophobic, and the coating material will be phase-separated and produce a suspension. In some embodiments, the weight ratio of the tetraalkoxysilane to the colloidal silica particles may be from 1:0.2 to 1:1.5, such as about 1:0.2 to 1:0.4, 1:0.4 to 1:0.5, 1:0.5 to 1:0.7, 1:0.7 to 1:0.9, 1:0.9 to 1:1.2, 1:1.2 to 1:1.3, 1:1.3 to 1:1.4, 1:1.4 to 1:1.5, or the like, but it is not limited thereto. If the colloidal silica particles ratio is too low, the compactness of the film will be insufficient. If the colloidal silica particles ratio is too high, the hydrophilicity of the film will be too high. In some embodiments, the weight ratio of the tetraalkoxysilane to the trialkoxyepoxysilane may be from 1:1.0 to 1:10.0, such as 1:1.0 to 1:2.0, 1:2.0 to 1:2.5, 1:2.5 to 1:3.0, 1:3.0 to 1:4.0, 1:4.0 to 1:5.0, 1:5.0 to 1:6.0, 1:6.0 to 1:7.0, 1:7.0 to 1:8.0, 1:8.0 to 1:9.0, 1:9.0 to 1:10.0, or the like, but it is not limited thereto. If the trialkoxyepoxysilane ratio is too low, the coating material stability will be insufficient, and the adhesion of the film and the substrate will be also insufficient. If the trialkoxyepoxysilane ratio is too high, the coating material will be phase-separated and produce a suspension.

In some embodiments, the tetraalkoxysilane includes tetramethoxysilane (TMOS), tetraethoxysilane (TEOS), tetrapropoxysilane (TPOS), or a combination thereof. In some embodiments, the alkyl-trialkoxysilane comprises methyltrimethoxysilane, methyltriethoxysilane, polyethyleneglycol-modified trialkoxysilane, or a combination thereof. In some embodiments, the trialkoxyepoxysilane comprises (3-glycidyloxypropyl)-trimethoxysilane, (3-glycidyloxypropyl)-triethoxysilane, or a combination thereof. In the disclosure, tri-functional siloxane precursor is introduced to copolymerize with the difunctional siloxane precursor, which may form semi-linear ladder-type sol-gel silicon oxide material to achieve a better film formability.

In some embodiments, the acidic aqueous solution of vanadium salt has a pH value of 2 to 4, such as about 3, but it is not limited thereto. The acidic aqueous solution of titanium salt or zirconium salt has a pH value of 4 to 6. If the pH value of the acidic aqueous solution is too low, the acidic aqueous solution will be unstable and solid will precipitate out easily, or the compactness of the film will be negatively influenced. If the pH value of the acidic aqueous solution is too high, the coating material will not be sufficiently stable. In some embodiments, the acid of the acidic aqueous solution of metal salt includes phosphoric acid, acetic acid, or a combination thereof. The pH value of the reaction is controlled by pH isoelectric point of the sol-gel silicon oxide material. When the pH value is low, the surface of the silicon oxide particles is hydrophilic, which is favorable to disperse the inorganic particles in aqueous solution. After the acid is volatilized during the drying process, the pH value of the sample becomes higher to promote crosslinking of the sol-gel coating film, and the surface of the coating film is recovered to electrical neutral and does not absorb water. As such, the film may achieve excellent water resistance and corrosion resistance.

The colloidal silica particles have a diameter of about 15 nm to 30nm, such as about 15nm, 20nm, 25nm, 30nm, or the like, but it is not limited thereto. If the colloidal silica particles are too small, the colloidal silica particles will easily aggregate and precipitate out. If the colloidal silica particles are too large, their dispersibility will be poor, the coating material made of these large particles will become turbid.

In some embodiments, auxiliary, aqueous resin, or a combination thereof are further added to the water-based coating material. The auxiliary can be a defoamer, a coalescing agent, or a combination thereof, but it is not limited thereto. The aqueous resin can be polyvinyl acetate (PVAc), acrylic, or a combination thereof, but it is not limited thereto. The addition amount of the aqueous resin is about 50 wt% to 75 wt%. If the addition amount of the aqueous resin is too low, the flexibility of the film will be insufficient for process. If the addition amount of the aqueous resin is too high, the anti-corrosion ability of the film will be lowered.

Alternatively, a water-based coating material is provided, which includes a product formed by reacting a modified oligomer with trialkoxyepoxysilane, wherein the modified oligomer is formed by reacting an oligomer with colloidal silica particles, and wherein the oligomer is formed by reacting tetraalkoxysilane, acidic aqueous solution of metal salt, and alkyl-trialkoxysilane. The water-based coating material is similar to that described above and the related description is not repeated here.

The disclosure develops a method to wrap a compound containing metal and oxygen by siloxane precursors of different types via sol-gel process to prepare a hybrid resin coating material, which may directly replace passivation film. The material design may have excellent film formability and metal adhesion/paint adhesion. The material chemical crosslinking design may readily utilize an equipment of traditional passivation process to do the coating, such that metal processing plants do not need to frequently replace the equipment. As such, it can speed up the introduction of new technologies, and take into account the water-based, self-dispersing cross-linking design to meet the requirements of metal passivation and corrosion resistance.

Below, exemplary embodiments will be described in detail so as to be easily realized by a person having ordinary knowledge in the art. The inventive concept may be embodied in various forms without being limited to the exemplary embodiments set forth herein. Descriptions of well-known parts are omitted for clarity, and like reference numerals refer to like elements throughout.

### EXAMPLES

### Example 1

Aqueous solution of sodium metavanadate (NaVO₃) was adjusted by 85wt% phosphoric acid (H₃PO₄), thereby obtaining an acidic aqueous solution of vanadium salt having a pH value of 2 to 4. The acidic aqueous solution of vanadium salt, tetraethoxysilane (TEOS), and methyltriethoxysilane (A162) were mixed in water, and stirred at room temperature for 3 hours. Subsequently, colloidal silica dispersion Lavasil CT20DH (commercially available from AkzoNobel, diameter=20 nm, and solid content=about 34wt% to 35wt%) was added to the reaction and then continuously stirred at room temperature for 30 minutes. (3-glycidyloxypropyl)-trimethoxysilane (A187) was then added to the reaction to continuously react at room temperature overnight, thereby obtaining a water-based coating material. The reactant amounts for the water-based coating material are tabulated in Table 1. The chemical and physical properties of the water-based coating material are shown below: solid content was 17.85%, pH value was 3.09, viscosity was 2.27 cps, average diameter was 69.74 nm, and Zeta potential was -2.67 mV.

### Example 2

Aqueous solution of sodium metavanadate (NaVO₃) was adjusted by 85wt% phosphoric acid (H₃PO₄), thereby obtaining an acidic aqueous solution of vanadium salt having a pH value of 2 to 4. The acidic aqueous solution of vanadium salt, tetraethoxysilane (TEOS), and methyltriethoxysilane (A162) were mixed in water, and stirred at room temperature for 3 hours. Subsequently, colloidal silica dispersion Lavasil CT20DH (commercially available from AkzoNobel, diameter=20 nm, and solid content=about 34wt% to 35wt%) was added to the reaction and then continuously stirred at room temperature for 30 minutes. (3-glycidyloxypropyl)-trimethoxysilane (A187) was then added to the reaction to continuously react at room temperature overnight, thereby obtaining a water-based coating material. The reactant amounts for the water-based coating material are tabulated in Table 1. The chemical and physical properties of the water-based coating material are shown below: solid content was 17.85%, pH value was 2.99, viscosity was 2.27 cps, average diameter was 69.74 nm, and Zeta potential was -2.67 mV.

### Example 3

Aqueous solution of sodium metavanadate (NaVO₃) was adjusted by 85wt% phosphoric acid (H₃PO₄), thereby obtaining an acidic aqueous solution of vanadium salt having a pH value of 2 to 4. The acidic aqueous solution of vanadium salt, tetraethoxysilane (TEOS), and methyltriethoxysilane (A162) were mixed in water, and stirred at room temperature for 3 hours. Subsequently, colloidal silica dispersion Lavasil CT20DH (commercially available from AkzoNobel, diameter=20 nm, and solid content=about 34wt% to 35wt%) was added to the reaction and then continuously stirred at room temperature for 30 minutes. (3-glycidyloxypropyl)-trimethoxysilane (A187) was then added to the reaction to continuously react at room temperature overnight, thereby obtaining a water-based coating material. The reactant amounts for the water-based coating material are tabulated in Table 1. The chemical and physical properties of the water-based coating material are shown below: solid content was 17.85%, pH value was 3.07, viscosity was 3.36 cps, average diameter was 69.74 nm, and Zeta potential was -2.67 mV.

### Example 4

Aqueous solution of sodium metavanadate (NaVO₃) was adjusted by 85wt% phosphoric acid (H₃PO₄), thereby obtaining an acidic aqueous solution of vanadium salt having a pH value of 2 to 4. The acidic aqueous solution of vanadium salt, tetraethoxysilane (TEOS), and methyltriethoxysilane (A162) were mixed in water, and stirred at room temperature for 3 hours. Subsequently, colloidal silica dispersion Lavasil CT20DH (commercially available from AkzoNobel, diameter=20 nm, and solid content=about 34wt% to 35wt%) was added to the reaction and then continuously stirred at room temperature for 30 minutes. (3-glycidyloxypropyl)-trimethoxysilane (A187) was then added to the reaction to continuously react at room temperature overnight, thereby obtaining a water-based coating material. The reactant amounts for the water-based coating material are tabulated in Table 1. The chemical and physical properties of the water-based coating material are shown below: solid content was 17.85%, pH value was 2.99, viscosity was 3.34 cps, average diameter was 69.74 nm, and Zeta potential was -2.67 mV.

### Example 5

Aqueous solution of sodium metavanadate (NaVO₃) was adjusted by 85wt% phosphoric acid (H₃PO₄), thereby obtaining an acidic aqueous solution of vanadium salt having a pH value of 2 to 4. The acidic aqueous solution of vanadium salt, tetraethoxysilane (TEOS), and methyltriethoxysilane (A162) were mixed in water, and stirred at room temperature for 3 hours. Subsequently, colloidal silica dispersion Lavasil CT20DH (commercially available from AkzoNobel, diameter=20 nm, and solid content=about 34wt% to 35wt%) was added to the reaction and then continuously stirred at room temperature for 30 minutes. (3-glycidyloxypropyl)-trimethoxysilane (A187) was then added to the reaction to continuously react at room temperature overnight, thereby obtaining a water-based coating material. The reactant amounts for the water-based coating material are tabulated in Table 1. The chemical and physical properties of the water-based coating material are shown below: solid content was 17.85%, pH value was 2.87, viscosity was 3.71 cps, average diameter was 69.74 nm, and Zeta potential was -2.67 mV.

### Example 6

Aqueous solution of sodium metavanadate (NaVO₃) was adjusted by 85wt% phosphoric acid (H₃PO₄), thereby obtaining an acidic aqueous solution of vanadium salt having a pH value of 2 to 4. The acidic aqueous solution of vanadium salt, tetraethoxysilane (TEOS), and methyltriethoxysilane (A162) were mixed in water, and stirred at room temperature for 3 hours. Subsequently, colloidal silica dispersion Lavasil CT20DH (commercially available from AkzoNobel, diameter=20 nm, and solid content=about 34wt% to 35wt%) was added to the reaction and then continuously stirred at room temperature for 30 minutes. (3-glycidyloxypropyl)-trimethoxysilane (A187) was then added to the reaction to continuously react at room temperature overnight, thereby obtaining a water-based coating material. The reactant amounts for the water-based coating material are tabulated in Table 1. The chemical and physical properties of the water-based coating material are shown below: solid content was 17.85%, pH value was 3.02, viscosity was 3.12 cps, average diameter was 69.74 nm, and Zeta potential was -2.67 mV.

### Example 7

Aqueous solution of sodium metavanadate (NaVO₃) was adjusted by 85wt% phosphoric acid (H₃PO₄), thereby obtaining an acidic aqueous solution of vanadium salt having a pH value of 2 to 4. The acidic aqueous solution of vanadium salt, tetraethoxysilane (TEOS), and methyltriethoxysilane (A162) were mixed in water, and stirred at room temperature for 3 hours. Subsequently, colloidal silica dispersion Lavasil CT20DH (commercially available from AkzoNobel, diameter=20 nm, and solid content=about 34wt% to 35wt%) was added to the reaction and then continuously stirred at room temperature for 30 minutes. (3-glycidyloxypropyl)-trimethoxysilane (A187) was then added to the reaction to continuously react at room temperature overnight, thereby obtaining a water-based coating material. The reactant amounts for the water-based coating material are tabulated in Table 1. The chemical and physical properties of the water-based coating material are shown below: solid content was 17.85%, pH value was 2.96, viscosity was 3.14 cps, average diameter was 69.74 nm, and Zeta potential was -2.67 mV.

**Table 1**

| | TEOS (g) | A162 (g) | A187 (g) | CT20DH dispersion (g) | NaVO₃ (g) | H₃PO₄ (g) | pH |
|---|---|---|---|---|---|---|---|
| Example 1 | 2.145 | 5.355 | 15 | 7.5 | 0.341 | 0.260 | 3.09 |
| Example 2 | 2.145 | 5.355 | 15 | 7.5 | 0.228 | 0.174 | 2.99 |
| Example 3 | 3.750 | 3.750 | 15 | 7.5 | 0.341 | 0.260 | 3.07 |
| Example 4 | 3.750 | 3.750 | 15 | 7.5 | 0.228 | 0.174 | 2.99 |
| Example 5 | 3.750 | 3.750 | 15 | 7.5 | 0.114 | 0.087 | 2.87 |
| Example 6 | 5.355 | 2.145 | 15 | 7.5 | 0.341 | 0.260 | 3.02 |
| Example 7 | 5.355 | 2.145 | 15 | 7.5 | 0.228 | 0.174 | 2.96 |

### Comparative Example 1

Aqueous solution of sodium metavanadate (NaVO₃) was adjusted by 85wt% phosphoric acid (H₃PO₄), thereby obtaining an acidic aqueous solution of vanadium salt having a pH value of 2 to 4. The acidic aqueous solution of vanadium salt and methyltriethoxysilane (A162) were mixed in water (without TEOS), and stirred at room temperature for 3 hours. Subsequently, colloidal silica dispersion Lavasil CT20DH (commercially available from AkzoNobel, diameter=20 nm, and solid content=about 34wt% to 35wt%) was added to the reaction and then continuously stirred at room temperature for 30 minutes. (3-glycidyloxypropyl)-trimethoxysilane (A187) was then added to the reaction to continuously react at room temperature overnight, thereby obtaining a solution with suspended solids. The reactant amounts for the reaction are tabulated in Table 2.

### Comparative Example 2

Aqueous solution of sodium metavanadate (NaVO₃) was adjusted by 85wt% phosphoric acid (H₃PO₄), thereby obtaining an acidic aqueous solution of vanadium salt having a pH value of 2 to 4. The acidic aqueous solution of vanadium salt and tetraethoxysilane (TEOS) were mixed in water (without A162), and stirred at room temperature for 3 hours. Subsequently, colloidal silica dispersion Lavasil CT20DH (commercially available from AkzoNobel, diameter=20nm, and solid content=about 34wt% to 35wt%) was added to the reaction and then continuously stirred at room temperature for 30 minutes. (3-glycidyloxypropyl)-trimethoxysilane (A187) was then added to the reaction to continuously react at room temperature overnight, thereby obtaining a solution with suspended solids. The reactant amounts for the reaction are tabulated in Table 2.

### Comparative Example 3

Aqueous solution of sodium metavanadate (NaVO₃) was adjusted by 85wt% phosphoric acid (H₃PO₄), thereby obtaining an acidic aqueous solution of vanadium salt having a pH value of 2 to 4. The acidic aqueous solution of vanadium salt, tetraethoxysilane (TEOS), and methyltriethoxysilane (A162) were mixed in water, and stirred at room temperature for 3 hours. Subsequently, colloidal silica dispersion Lavasil CT20DH (commercially available from AkzoNobel, diameter=20 nm, and solid content=about 34wt% to 35wt%) was added to the reaction to continuously react at room temperature overnight (without A187), thereby obtaining a solution with suspended solids. The reactant amounts for the reaction are tabulated in Table 2.

### Comparative Example 4

Aqueous solution of sodium metavanadate (NaVO₃) was adjusted by 85wt% phosphoric acid (H₃PO₄), thereby obtaining an acidic aqueous solution of vanadium salt having a pH value of 2 to 4. The acidic aqueous solution of vanadium salt, tetraethoxysilane (TEOS), and methyltriethoxysilane (A162) were mixed in water, and stirred at room temperature for 3 hours. Subsequently, (3-glycidyloxypropyl)-trimethoxysilane (A187) was then added to the reaction to continuously react at room temperature overnight (without CT20DH), thereby obtaining a solution with suspended solids. The reactant amounts for the reaction are tabulated in Table 2.

### Comparative Example 5

Aqueous solution of phosphoric acid (about 0.36g after conversion), tetraethoxysilane (TEOS), and methyltriethoxysilane (A162) were mixed in water (without NaVO₃), and stirred at room temperature for 3 hours. Subsequently, colloidal silica dispersion Lavasil CT20DH (commercially available from AkzoNobel, diameter=20 nm, and solid content=about 34wt% to 35wt%) was added to the reaction and then continuously stirred at room temperature for 30 minutes. (3-glycidyloxypropyl)-trimethoxysilane (A187) was then added to the reaction to continuously react at room temperature overnight. The reactant amounts for the reaction are tabulated in Table 2.

### Comparative Example 6

Aqueous solution of phosphoric acid (about 0.18g after conversion), tetraethoxysilane (TEOS), and methyltriethoxysilane (A162) were mixed in water (without NaVO₃), and stirred at room temperature for 3 hours. Subsequently, colloidal silica dispersion Lavasil CT20DH (commercially available from AkzoNobel, diameter=20 nm, and solid content=about 34wt% to 35wt%) was added to the reaction and then continuously stirred at room temperature for 30 minutes. (3-glycidyloxypropyl)-trimethoxysilane (A187) was then added to the reaction to continuously react at room temperature overnight. The reactant amounts for the reaction are tabulated in Table 2.

**Table 2**

| | TEOS (g) | A162 (g) | A187 (g) | CT20DH dispersion (g) | NaVO₃ (g) | H₃PO₄ (g) | Remarks |
|---|---|---|---|---|---|---|---|
| Comparative Example 1 | - | 7.5 | 15 | 7.5 | 0.341 | 0.260 | Solution with suspended solids |
| Comparative Example 2 | 7.5 | - | 15 | 7.5 | 0.341 | 0.260 | Solution with suspended solids |
| Comparative Example 3 | 2.145 | 5.355 | - | 7.5 | 0.341 | 0.260 | Solution with suspended solids |
| Comparative Example 4 | 2.145 | 5.355 | 15 | - | 0.341 | 0.260 | Solution with suspended solids |
| Comparative Example 5 | 2.145 | 5.355 | 15 | 7.5 | - | 0.360 | - |
| Comparative Example 6 | 2.145 | 5.355 | 15 | 7.5 | - | 0.180 | - |

As seen in Table 2, the water-based coating material of vanadium salt should combine siloxane and colloidal particles to maintain excellent stability.

### Comparative Example 7

Aqueous solution of sodium metavanadate (NaVO₃) was adjusted by 85wt% phosphoric acid (H₃PO₄), thereby obtaining an acidic aqueous solution of vanadium salt having a pH value of 2 to 4. The acidic aqueous solution of vanadium salt, 2.145g of tetraethoxysilane (TEOS), and 5.355g of methyltriethoxysilane (A162) were mixed in water, and stirred at room temperature for 3 hours. Subsequently, 7.5g of colloidal silica dispersion Lavasil CT30DH (commercially available from AkzoNobel, diameter=10 nm, and solid content=about 22wt%) was added to the reaction and then continuously stirred at room temperature for 30 minutes. Then, 15g of (3-glycidyloxypropyl)-trimethoxysilane (A187) was then added to the reaction to continuously react at room temperature overnight, thereby obtaining a solution having aggregation. Accordingly, the diameter of the colloidal particles would also influence the stability of the water-based coating material.

### Comparative Example 8

Aqueous solution of sodium metavanadate (NaVO₃) was adjusted by 85wt% phosphoric acid (H₃PO₄), thereby obtaining an acidic aqueous solution of vanadium salt having a pH value of 2 to 4. The acidic aqueous solution of vanadium salt, 2.145g of tetraethoxysilane (TEOS), and 5.355g of methyltriethoxysilane (A162), 7.5g of colloidal silica dispersion Lavasil CT20DH (commercially available from AkzoNobel, diameter=20 nm, and solid content=about 34wt% to 35wt%), and 15g of (3-glycidyloxypropyl)-trimethoxysilane (A187) were mixed in water to react at room temperature overnight, thereby obtaining a solution with suspended solids.

### Comparative Example 9

Aqueous solution of sodium metavanadate (NaVO₃) was adjusted by 85wt% phosphoric acid (H₃PO₄), thereby obtaining an acidic aqueous solution of vanadium salt having a pH value of 2 to 4. The acidic aqueous solution of vanadium salt, 2.145g of tetraethoxysilane (TEOS), and 5.355g of methyltriethoxysilane (A162) were mixed in water, and stirred at room temperature for 3 hours. Subsequently, 15g of (3-glycidyloxypropyl)-trimethoxysilane (A187) was added to the reaction to continuously react at room temperature overnight. Then, 7.5g of colloidal silica dispersion Lavasil CT20DH (commercially available from AkzoNobel, diameter=20 nm, and solid content=about 34wt% to 35wt%) was added to the reaction and then continuously stirred at room temperature for 30 minutes, thereby obtaining a solution having precipitate.

### Comparative Example 10

Aqueous solution of sodium metavanadate (NaVO₃) was adjusted by 85wt% phosphoric acid (H₃PO₄), thereby obtaining an acidic aqueous solution of vanadium salt having a pH value of 2 to 4. The acidic aqueous solution of vanadium salt, 2.145g of tetraethoxysilane (TEOS), and 5.355g of methyltriethoxysilane (A162) were mixed in water, and stirred at room temperature for 3 hours. Subsequently, 7.5g of colloidal silica dispersion Lavasil CT20DH (commercially available from AkzoNobel, diameter=20 nm, and solid content=about 34wt% to 35wt%) and 15g of (3-glycidyloxypropyl)-trimethoxysilane (A187) were then added to the reaction to continuously react at room temperature overnight, thereby obtaining a suspension. Accordingly, the addition order of the reactants was beneficial to the stability of the water-based coating material.

### Example 8

The water-based coating materials in Examples 1 to 7, the water-based coating materials in Comparative Examples 5 and 6, and the aqueous solution of vanadium salt (prepared as Comparative Example 1) were respectively applied on acid-washed aluminum substrates via flow coating, and dried at 60°C for 10 minutes and then dried at 200°C for 10 minutes to form coating films. The acid-washed aluminum substrates that were treated with hexavalent chromium treatment (provided by Tatung) were dried at 60°C for 10 minutes and then further dried at 200°C for 10 minutes. Thereafter, the film impedances (Ohm·cm²) were respectively measured by electrochemical impedance spectroscopy (EIS), and the film adhesions were respectively measured by the standard ASTM D3359, as tabulated in Table 3.

**Table 3**

| Coating material | Coating EIS impedance (Ohm·cm²) | Coating adhesion (ASTM D3359) |
|---|---|---|
| Example 1 | 2.19^{∗}10⁶ | 5B |
| Example 2 | 3.51^{∗}10⁵ | 5B |
| Example 3 | 2.35^{∗}10⁶ | 5B |
| Example 4 | 2.02^{∗}10⁶ | 5B |
| Example 5 | 1.93^{∗}10⁶ | 5B |
| Example 6 | 9.53^{∗}10⁵ | 5B |
| Example 7 | 1.52^{∗}10⁶ | 5B |
| Comparative Example 5 | 2.29^{∗}10⁴ | 5B |
| Comparative Example 6 | 1.84^{∗}10⁵ | 5B |
| Aqueous solution of vanadium salt | 6.13^{∗}10⁵ | 5B |
| Hexavalent chromium treatment (Tatung) | 1.7^{∗}10⁵ | 5B |

As seen in Table 3, the EIS impedance of the corrosion resistance from direct treatment of vanadium acid and phosphoric acid (Comparative Examples 5 and 6) or chromic acid was 10⁴ to 10⁵ Ohm·cm², and the EIS impedance of the film from the water-based coating material in the disclosure could achieve 10⁶ Ohm·cm².

### Example 9

The water-based coating material in Example 1 was coated on an acid-washed aluminum substrate by flow coating, and then dried at 60°C for 10 minutes, and then further dried at 200°C for 10 minutes. Similarly, the acid-washed aluminum substrates that were respectively treated by hexavalent chromium treatment (provided by Tatung), BASF Gardobond^{®}, and Henkel Alodine^{®} were also dried at 60°C for 10 minutes, and then further dried at 200°C for 10 minutes. Thereafter, the coating films were tested by the standard ASTM B117 (salt spray test).

**Table 4**

| Coating material | Salt spray test (ASTM B117) |
|---|---|
| Example 1 | -200 hr |
| Hexavalent chromium treatment (Tatung) | -160 hr |
| BASF Gardobond^{®} | -72 hr |
| Henkel Alodine ^{®} | -72 hr |

As seen in Table 4, salt spray test results show that the water-based coating material had an obviously better performance than the hexavalent chromium treatment, BASF Gardobond^{®} film, and Henkel Alodine^{®} film.

### Example 10

Aqueous solution of hexafluorotitanic acid (H₂TiF₆, commercially available from Alfa Aesar, concentration=60wt%) was prepared to be 1N, and then mixed with tetraethoxysilane (TEOS) and methyltriethoxysilane (A162) in water, and stirred at room temperature for 3 hours. Subsequently, colloidal silica dispersion Lavasil CT20DH (commercially available from AkzoNobel, diameter=20 nm, and solid content=about 34wt% to 35wt%) was added to the reaction and then continuously stirred at room temperature for 30 minutes. (3-glycidyloxypropyl)-trimethoxysilane (A187) was then added to the reaction to continuously react at room temperature overnight, and then adjusted by 10wt% sodium hydroxide (NaOH) solution to obtain a water-based coating material with a pH value of about 4 to 5. The reactant amounts for the water-based coating material are tabulated in Table 5. The chemical and physical properties of the water-based coating material are shown below: solid content was 16.5%, pH value was 5.1, viscosity was 1.3 cps.

### Example 11

Aqueous solution of hexafluorozirconic acid (H₂ZrF₆, commercially available from Aldrich, concentration=50wt%) was prepared to be 1N, and then mixed with tetraethoxysilane (TEOS) and methyltriethoxysilane (A162) in water, and stirred at room temperature for 3 hours. Subsequently, colloidal silica dispersion Lavasil CT20DH (commercially available from AkzoNobel, diameter=20 nm, and solid content=about 34wt% to 35wt%) was added to the reaction and then continuously stirred at room temperature for 30 minutes. (3-glycidyloxypropyl)-trimethoxysilane (A187) was then added to the reaction to continuously react at room temperature overnight, and then adjusted by 10wt% sodium hydroxide (NaOH) solution to obtain a water-based coating material with a pH value of about 4 to 5. The reactant amounts for the water-based coating material are tabulated in Table 5. The chemical and physical properties of the water-based coating material are shown below: solid content was 16.0%, pH value was 4.5, viscosity was 1.7 cps.

**Table 5**

| | TEOS (g) | A162 (g) | A187 (g) | CT20DH (g) | 1N H₂ZrF₆ (g) | 1N H₂TiF₆ (g) | pH |
|---|---|---|---|---|---|---|---|
| Example 10 | 2.145 | 5.355 | 15 | 7.5 | 0 | 6.0 | 5.1 |
| Example 11 | 2.145 | 5.355 | 15 | 7.5 | 6.0 | 0 | 4.5 |

### Example 12

The water-based coating materials in Examples 10 and 11 were respectively applied on acid-washed aluminum substrates via flow coating, and dried at 60°C for 10 minutes and then dried at 200°C for 10 minutes to form coating films. Thereafter, the film impedances (Ohm·cm²) were respectively measured by electrochemical impedance spectroscopy (EIS), and the film adhesions were respectively measured by the standard ASTM D3359, as tabulated in Table 6.

**Table 6**

| Coating material | Coating EIS impedance (Ohm·cm²) | Coating adhesion (ASTM D3359) |
|---|---|---|
| Example 10 | 3.92^{∗}10⁴ | 5B |
| Example 11 | 5.23^{∗}10⁵ | 5B |
| Comparative Example 5 | 2.29^{∗}10⁴ | 5B |

As seen in Table 6, compared to the EIS impedance of the corrosion resistance from direct treatment of phosphoric acid (Comparative Examples 5), the water-based coating material in the disclosure (Examples 10 and 11) had a better performance.

### Example 13

The water-based coating material in Examples 10 and 11 were respectively coated on an acid-washed aluminum substrate by flow coating, and then dried at 60°C for 10 minutes, and then further dried at 200°C for 10 minutes. Thereafter, the coating films were tested by the standard ASTM B117 (salt spray test).

**Table 7**

| Coating material | Salt spray test (ASTM B117) |
|---|---|
| Example 10 | ~114hr |
| Example 11 | ~204 hr |
| BASF Gardobond^{®} | -72 hr |
| Henkel Alodine ^{®} | -72 hr |

As seen in Table 7, salt spray test results show that the water-based coating material (Examples 10 and 11) had an obviously better performance than the BASF Gardobond^{®} film and Henkel Alodine^{®} film.

## Claims

1. A method for manufacturing a water-based coating material, comprising:
(a) reacting tetraalkoxysilane, acidic aqueous solution of metal salt, and alkyl-trialkoxysilane to form an oligomer, wherein the metal salt includes vanadium salt, titanium salt, or zirconium salt;
(b) reacting the oligomer with colloidal silica particles to form a modified oligomer; and
(c) reacting the modified oligomer with trialkoxyepoxysilane to obtain a water-based coating material, wherein
the colloidal silica particles have a diameter of 15 nm to 30 nm.

2. The method as claimed in claim 1, wherein the tetraalkoxysilane and the metal salt have a weight ratio of 1:0.01 to 1:0.3, the tetraalkoxysilane and the alkyl-trialkoxysilane have a weight ratio of 1:0.1 to 1:3.0, the tetraalkoxysilane and the colloidal silica particles have a weight ratio of 1:0.2 to 1:1.5, and the tetraalkoxysilane and the trialkoxyepoxysilane have a weight ratio of 1:1.0 to 1:10.0.

3. The method as claimed in claim 1, wherein the tetraalkoxysilane comprises tetramethoxysilane, tetraethoxysilane, tetrapropoxysilane, or a combination thereof.

4. The method as claimed in claim 1, wherein the alkyl-trialkoxysilane comprises methyltrimethoxysilane, methyltriethoxysilane, polyethyleneglycol-modified trialkoxysilane, or a combination thereof.

5. The method as claimed in claim 1, wherein the trialkoxyepoxysilane comprises (3-glycidyloxypropyl)-trimethoxysilane, (3-glycidyloxypropyl)-triethoxysilane, or a combination thereof.

6. A water-based coating material, comprising:
a product formed by reacting a modified oligomer with trialkoxyepoxysilane,
wherein the modified oligomer is formed by reacting an oligomer with colloidal silica particles, and
wherein the oligomer is formed by reacting tetraalkoxysilane, acidic aqueous solution of metal salt, and alkyl-trialkoxysilane, wherein the metal salt includes vanadium salt, titanium salt, or zirconium salt, wherein
the colloidal silica particles have a diameter of 15 nm to 30 nm.

7. The water-based coating material as claimed in claim 6, wherein the tetraalkoxysilane and the metal salt have a weight ratio of 1 :0.01 to 1 :0.3, the tetraalkoxysilane and the alkyl-trialkoxysilane have a weight ratio of 1:0.1 to 1:3.0, the tetraalkoxysilane and the colloidal silica particles have a weight ratio of 1:0.2 to 1:1.5, and the tetraalkoxysilane and the trialkoxyepoxysilane have a weight ratio of 1:1.0 to 1:10.0.

8. The water-based coating material as claimed in claim 6, wherein the tetraalkoxysilane comprises tetramethoxysilane, tetraethoxysilane, tetrapropoxysilane, or a combination thereof.

9. The water-based coating material as claimed in claim 6, wherein the alkyl-trialkoxysilane comprises methyltrimethoxysilane, methyltriethoxysilane, polyethyleneglycol-modified trialkoxysilane, or a combination thereof.

10. The water-based coating material as claimed in claim 6, wherein the trialkoxyepoxysilane comprises (3-glycidyloxypropyl)-trimethoxysilane, (3-glycidyloxypropyl)-triethoxysilane, or a combination thereof.

11. The water-based coating material as claimed in claim 6, wherein the acidic aqueous solution of vanadium salt has a pH value of 2 to 4.

12. The water-based coating material as claimed in claim 6, wherein the acidic aqueous solution of titanium salt or zirconium salt has a pH value of 4 to 6.

13. The water-based coating material as claimed in claim 6, wherein the acid for the acidic solution of the metal salt includes phosphoric acid, acetic acid, or a combination thereof.

14. The water-based coating material as claimed in claim 6, further comprising auxiliary agent, aqueous resin, or a combination thereof.

## Patentansprüche

1. Verfahren zum Herstellen eines Beschichtungsmaterials auf Wasserbasis, mit den Schritten:
(a) Umsetzen von Tetraalkoxysilan, saurer wässriger Lösung eines Metallsalzes und Alkyltrialkoxysilan zum Herstellen eines Oligomers, wobei das Metallsalz Vanadiumsalz, Titansalz oder Zirkoniumsalz aufweist;
(b) Umsetzen des Oligomers mit kolloidalen Siliziumdioxidpartikeln zum Herstellen eines modifizierten Oligomers; und
(c) Umsetzen des modifizierten Oligomers mit Trialkoxyepoxysilan zum Erhalten eines Beschichtungsmaterials auf Wasserbasis, wobei die kolloidalen Siliziumdioxidpartikel einen Durchmesser von 15 nm bis 30 nm haben.

2. Verfahren nach Anspruch 1, wobei das Tetraalkoxysilan und das Metallsalz ein Gewichtsverhältnis von 1:0,01 bis 1:0,3 haben, das Tetraalkoxysilan und das Alkyltrialkoxysilan ein Gewichtsverhältnis von 1:0,1 bis 1:3,0 haben, das Tetraalkoxysilan und die kolloidalen Siliziumdioxidpartikel ein Gewichtsverhältnis von 1:0,2 bis 1:1,5, und das Tetraalkoxysilan und das Trialkoxyepoxysilan ein Gewichtsverhältnis von 1:1,0 bis 1:10,0 haben.

3. Verfahren nach Anspruch 1, wobei das Tetraalkoxysilan Tetramethoxysilan, Tetraethoxysilan, Tetrapropoxysilan oder eine Kombination davon aufweist.

4. Verfahren nach Anspruch 1, wobei das Alkyltrialkoxysilan Methyltrimethoxysilan, Methyltriethoxysilan, mit Polyethylenglykol modifiziertes Trialkoxysilan oder eine Kombination davon aufweist.

5. Verfahren nach Anspruch 1, wobei das Trialkoxyepoxysilan (3-Glycidyloxypropyl)-trimethoxysilan, (3-Glycidyloxypropyl)-triethoxysilan oder eine Kombination davon aufweist.

6. Beschichtungsmaterial auf Wasserbasis, mit:
einem Produkt, das durch Umsetzen eines modifizierten Oligomers mit Trialkoxyepoxysilan erzeugt wird,
wobei das modifizierte Oligomer durch Umsetzen eines Oligomers mit kolloidalen Siliziumdioxidpartikeln gebildet wird, und
wobei das Oligomer durch Umsetzen von Tetraalkoxysilan, saurer wässriger Lösung eines Metallsalzes und Alkyltrialkoxysilan erzeugt wird, wobei das Metallsalz Vanadiumsalz, Titansalz oder Zirkoniumsalz aufweist, wobei
die kolloidalen Siliziumoxidpartikel einen Durchmesser von 15 nm bis 30 nm haben.

7. Beschichtungsmaterial auf Wasserbasis nach Anspruch 6, wobei das Tetraalkoxysilan und das Metallsalz ein Gewichtsverhältnis von 1:0,01 bis 1:0,3 aufweisen, das Tetraalkoxysilan und das Alkyltrialkoxysilan ein Gewichtsverhältnis von 1:0,1 bis 1:3,0 aufweisen, das Tetraalkoxysilan und die kolloidalen Siliziumdioxidpartikel ein Gewichtsverhältnis von 1:0,2 bis 1:1,5 aufweisen und das Tetraalkoxysilan und das Trialkoxyepoxysilan ein Gewichtsverhältnis von 1:1,0 bis 1:10,0 aufweisen.

8. Beschichtungsmaterial auf Wasserbasis nach Anspruch 6, wobei das Tetraalkoxysilan Tetramethoxysilan, Tetraethoxysilan, Tetrapropoxysilan oder eine Kombination davon aufweist.

9. Beschichtungsmaterial auf Wasserbasis nach Anspruch 6, wobei das Alkyltrialkoxysilan Methyltrimethoxysilan, Methyltriethoxysilan, mit Polyethylenglykol modifiziertes Trialkoxysilan oder eine Kombination davon aufweist.

10. Beschichtungsmaterial auf Wasserbasis nach Anspruch 6, wobei das Trialkoxyepoxysilan (3-Glycidyloxypropyl)-trimethoxysilan, (3-Glycidyloxypropyl)-triethoxysilan oder eine Kombination davon aufweist.

11. Beschichtungsmaterial auf Wasserbasis nach Anspruch 6, wobei die saure wässrige Lösung von Vanadiumsalz einen pH-Wert von 2 bis 4 aufweist.

12. Beschichtungsmaterial auf Wasserbasis nach Anspruch 6, wobei die saure wässrige Lösung von Titansalz oder Zirkoniumsalz einen pH-Wert von 4 bis 6 aufweist.

13. Beschichtungsmaterial auf Wasserbasis nach Anspruch 6, wobei die Säure für die saure Lösung des Metallsalzes Phosphorsäure, Essigsäure oder eine Kombination davon enthält.

14. Beschichtungsmaterial auf Wasserbasis nach Anspruch 6, ferner mit einem Zusatzstoff, wässrigem Harz oder einer Kombination davon.

## Revendications

1. Procédé de fabrication d'un matériau de revêtement à base d'eau, comprenant :
(a) la réaction du tétralkoxysilane, d'une solution aqueuse acide d'un sel métallique et d'alkyl-trialkoxysilane pour former un oligomère, dans lequel le sel métallique inclut un sel de vanadium, un sel de titane ou un sel de zirconium ;
(b) la réaction de l'oligomère avec des particules de silice colloïdale pour former un oligomère modifié ; et
(c) la réaction de l'oligomère modifié avec du trialkoxyépoxysilane pour obtenir un matériau de revêtement à base d'eau, dans lequel
les particules de silice colloïdale ont un diamètre de 15 nm à 30 nm.

2. Procédé selon la revendication 1, dans lequel le tétralkoxysilane et le sel métallique ont un rapport massique de 1:0,01 à 1:0,3, le tétralkoxysilane et l'alkyl-trialkoxysilane ont un rapport massique de 1:0,1 à 1:3,0, le tétralkoxysilane et les particules de silice colloïdale ont un rapport massique de 1:0,2 à 1:1,5, et le tétralkoxysilane et le trialkoxyépoxysilane ont un rapport massique de 1:1,0 à 1:10,0.

3. Procédé selon la revendication 1, dans lequel le tétralkoxysilane comprend le tétraméthoxysilane, le tétraéthoxysilane, le tétrapropoxysilane, ou une combinaison de ceux-ci.

4. Procédé selon la revendication 1, dans lequel l'alkyl-trialkoxysilane comprend le méthyltriméthoxysilane, le méthyltriéthoxysilane, le trialkoxysilane modifié par polyéthylène glycol, ou une combinaison de ceux-ci.

5. Procédé selon la revendication 1, dans lequel le trialkoxyépoxysilane comprend le (3-glycidyloxypropyl)-triméthoxysilane, le (3-glycidyloxypropyl)-triéthoxysilane, ou une combinaison de ceux-ci.

6. Matériau de revêtement à base d'eau, comprenant :
un produit formé par réaction d'un oligomère modifié par trialkoxyépoxysilane,
dans lequel l'oligomère modifié est formé par réaction d'un oligomère avec des particules de silice colloïdale, et
dans lequel l'oligomère est formé par réaction de tétralkoxysilane, d'une solution aqueuse acide d'un sel métallique et d'alkyl-trialkoxysilane, dans lequel le sel métallique inclut un sel de vanadium, un sel de titane ou un sel de zirconium, dans lequel
les particules de silice colloïdale ont un diamètre de 15 nm à 30 nm.

7. Matériau de revêtement à base d'eau selon la revendication 6, dans lequel le tétralkoxysilane et le sel métallique ont un rapport massique de 1:0,01 à 1:0,3, le tétralkoxysilane et l'alkyl-trialkoxysilane ont un rapport massique de 1:0,1 à 1:3,0, le tétralkoxysilane et les particules de silice colloïdale ont un rapport massique de 1:0,2 à 1:1,5, et le tétralkoxysilane et le trialkoxyépoxysilane ont un rapport massique de 1: 1,0 à 1: 10,0.

8. Matériau de revêtement à base d'eau selon la revendication 6, dans lequel le tétralkoxysilane comprend le tétraméthoxysilane, le tétraéthoxysilane, le tétrapropoxysilane, ou une combinaison de ceux-ci.

9. Matériau de revêtement à base d'eau selon la revendication 6, dans lequel l'alkyl-trialkoxysilane comprend le méthyltriméthoxysilane, le méthyltriéthoxysilane, le trialkoxysilane modifié par polyéthylène glycol, ou une combinaison de ceux-ci.

10. Matériau de revêtement à base d'eau selon la revendication 6, dans lequel le trialkoxyépoxysilane comprend le (3-glycidyloxypropyl)-triméthoxysilane, le (3-glycidyloxypropyl)-triéthoxysilane, ou une combinaison de ceux-ci.

11. Matériau de revêtement à base d'eau selon la revendication 6, dans lequel la solution aqueuse acide de sel de vanadium a une valeur de pH de 2 à 4.

12. Matériau de revêtement à base d'eau selon la revendication 6, dans lequel la solution aqueuse acide de sel de titane ou de sel de zirconium a une valeur de pH de 4 à 6.

13. Matériau de revêtement à base d'eau selon la revendication 6, dans lequel l'acide pour la solution acide du sel métallique inclut de l'acide phosphorique, de l'acide acétique, ou une combinaison de ceux-ci.

14. Matériau de revêtement à base d'eau selon la revendication 6, comprenant en outre un agent auxiliaire, une résine aqueuse, ou une combinaison de ceux-ci.
